# EUROPEAN PATENT SPECIFICATION

(11) **EP 1 531 640 B1**
(45) Date of publication and mention of the grant of the patent: **08.09.2010**
(21) Application number: 04009938.4
(22) Date of filing: 27.04.2004
(51) Int. Cl.: H04W 88/02

(54) **Transmitter and receiver circuits comprising an internal controller to establish operating parameters when no external controller is available**
Sende- und Empfangschaltungen mit interner Steuereinheit zur Einstellung von Operationsparameter wenn keine externe Steuereinheit verfügbar ist
Circuits d'émission et de réception comprenant un contrôleur interne pour établir des paramètres d'opération au cas ou aucun contrôleur externe n'est disponible

(30) Priority: 12.11.2003 US 706135
(43) Date of publication of application: 18.05.2005
(73) Proprietor: Silicon Laboratories Inc., Austin, TX 78701 (US)
(72) Inventor: Holcombe, Wayne T., Mountain View, California 94040 (US); Hegyi, Andras, Székesfehérvar 8000 (HU); Keller, Tibor, Budakeszi 2092 (HU); Horvath, Vince A., Budapest 1164 (HU); Pardoen, Matthijs D., Mountain View, California 94043 (US); Erdélyi, Janos, Dunakeszi 2120 (HU)
(74) Representative: Greene, Simon Kenneth

(56) References cited:
- EP-A- 1 035 741
- EP-A- 1 168 784
- WO-A-03/053008
- US-A- 6 076 099
- US-A1- 2002 075 834
- US-A1- 2002 174 254
- US-A1- 2003 092 395
- US-A1- 2003 100 301
- US-A1- 2003 103 464
- US-A1- 2003 115 371
- US-A1- 2003 137 966

## Description

### FIELD OF THE INVENTION

This invention relates to transmitter and receiver circuits and, more particularly, to transmitter and receiver circuits that are capable of operating without an external controller to supply operating parameters.

### BACKGROUND OF THE INVENTION

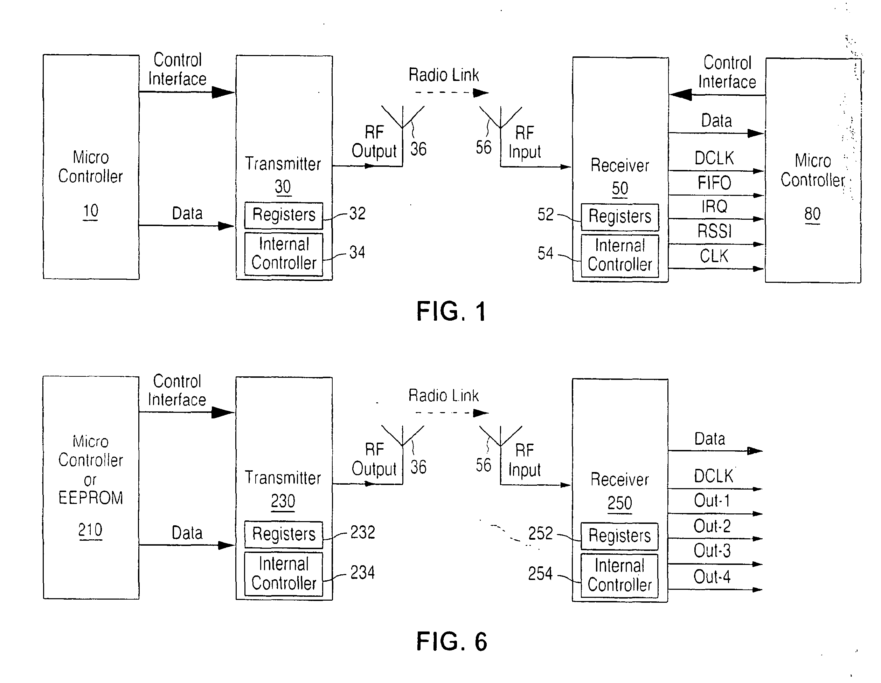

Conventionally, as illustrated in FIG. 1, many transmitter 30 and receiver 50 circuits include an internal controller 34 and 54, respectively, that communicates over a control interface with an external micro controller 10 or 80, respectively. The internal controller is incorporated into the transmitter or receiver circuit and may be fabricated on the same circuit substrate as the transmit section of the transmitter or the receiver section of the receiver. The control interface is usually a serial type (SPI, I2C type) or it can be a parallel interface as well. As micro-controller 10 or 80 sends control words for operating parameters to the transmitter 30 or receiver 50 circuit, the internal controller 34 or 54, respectively, stores the operating parameters in a storage section, e.g. sets registers 32 or 52, respectively. The values of operating parameters stored in the registers 32 or 52 are used to set the operating characteristics of the corresponding circuit. In other words, the transmit section of transmitter 30 will transmit in accordance with the operating characteristics stored in registers 32 and the receiver section of receiver 50 will receive data in accordance with the operating characteristics stored in registers 52. This way, the effect of a given control word is valid as long as the registers 32 or 52 are not modified, such as through a new set of operating parameters from the external controller 10 or 80.

The internal controller 34 or 54 may monitor some functional parameters as well, such as battery voltage, received radio signal level, etc. The internal controller 34 or 54 can modify registers 32 or 52, respectively, or generate output signals through I/O pins based on the monitored parameters.

Normally, an external controller 10 or 80, such as a microprocessor or micro-controller, configures the transmitter 30 or receiver 50 circuit for operation. The external controller sends operating parameters to the transmitter or receiver circuit via a control interface, where the operating parameters control the operating characteristics of the transmit or receive sections, such as frequency, power, or data rate. This arrangement typically results in the use of two circuits to implement a device, e.g. the external controller 10 or 80 and the transmitter 30 or receiver 50.

EP 1168784 describes an external controller for a mobile telephone. The external module includes a data store, memory module and control module.

### BRIEF SUMMARY OF THE INVENTION

According to the present invention, a transmitter circuit according to claim 1, and a receiving circuit according to claim 7.

The present invention involves an embodiment of a transmitter circuit having a storage section for storing operating parameters and a transmitter section configured to transmit a signal having characteristics determined by the operating parameters. The transmitter includes an internal controller configured to operate the transmitter section in accordance with the operating parameters. The internal controller senses a state of an input terminal to determine whether an external controller is present or not present. The internal controller operates to receive and store the operating parameters from the external controller when the external controller is present. The internal controller also operates to access external data store to obtain and store the operating parameters when the external controller is not present. In a further refinement of this embodiment, the internal controller is further configured to receive a first input signal corresponding to a first event and, responsive thereto, access a first portion of the external data store. In another refinement, the internal controller is further configured to receive a second input signal corresponding to a second event and, responsive thereto, access a second portion of the external data store. The first event may correspond to a user input, such as a pushbutton activation.

In an embodiment of a receiver circuit, according to the present invention, the receiver circuit includes a storage section for storing operating parameters and a receiver section configured to receive a signal having characteristics determined by the operating parameters. The receiver also includes an internal controller, the internal controller being configured to operate the receiver section in accordance with the operating parameters, where the internal controller senses a state of an input terminal to determine whether an external controller is present or not present, where the internal controller operates to receive and store the operating parameters from the external controller when the external controller is present, and where the internal controller operates to read data provided at predetermined terminals of the receiver circuit to determine at least some of the operating parameters when the external controller is not present. In a further refinement, the internal controller is configured to monitor a signal received by the receiver section to detect a first control word and, responsive thereto, set at least some of the operating parameters according to the first control word. In still another refinement, the internal controller is further configured to monitor a signal received by the receiver section to detect a second control word and, responsive thereto, set at least some of the operating parameters according to the second control word. The internal controller may be further configured to monitor a signal received by the receiver section to detect a control word and, responsive thereto, output a digital signal at a predetermined terminal according to the control word.

### BRIEF DESCRIPTION OF THE DRAWINGS

The present invention is described herein with reference to the accompanying drawings, wherein:
Figure 1 is a functional block diagram illustrating a conventional transmitter-receiver pair controlled by external controllers.
Figure 2 is a functional block diagram illustrating an embodiment of a transmitter circuit, according to the present invention, capable of operating in a controller-less stand-alone mode.
Figure 3 is a control flow diagram illustrating an embodiment of a process of the internal controller of the transmitter circuit of Figure 2 for responding to an event and accessing a memory store, such as an EEPROM, in a stand-alone mode of operation.
Figure 4 is a functional block diagram illustrating a receiver circuit capable of operating in a controller-less stand-alone mode.
Figure 5 is a control flow diagram illustrating a process of the internal controller of the receiver circuit of Figure 4 for detecting a stand-alone mode of operation and self-configuring for operation.
Figure 6 is a functional block diagram illustrating a transmitter receiver pair where the receiver is capable of being configured for operation by the transmitter.
Figure 7 is a control flow diagram illustrating a process of the internal controllers of the transmitter and receiver circuits of Figure 6 for configuring the receiver circuit from the transmitter circuit.

### DETAILED DESCRIPTION OF THE INVENTION

Many simple applications, such as light switches, garage door openers, or remote controllers, do not require the capabilities of an external controller and, consequently, the cost of the additional controller. The functionality of an internal controller provided within the transmitter or receiver circuit may be utilized to detect that no external controller is present and to self-configure the circuit for operation. A single interface pin may be used to signal the internal controller. For example, the pin may be left floating to indicate that an external controller is present and coupled to a supply voltage in order to signal that no external controller is present. The internal controller may be configured to then obtain operating parameter data through the interface pins of the circuit.

For example, the transmitter circuit may be configured to output control information to a data store device, such as an electronically erasable programmable read-only memory (EEPROM), in order to read control words and/or operating parameter data from the memory device. A section of memory may be provided that corresponds to a specific event in the transmitter circuit, such as detection of a low-battery condition, wake-up from an internal timer, or receiving a signal representing a user input event, e.g. activation of a pushbutton. The internal controller can respond to the event by outputting an address value to the memory that corresponds to the event. The memory data can then be read in by the internal controller, which then configures and operates the transmitter in accordance with the operating data obtained from the memory for the event.

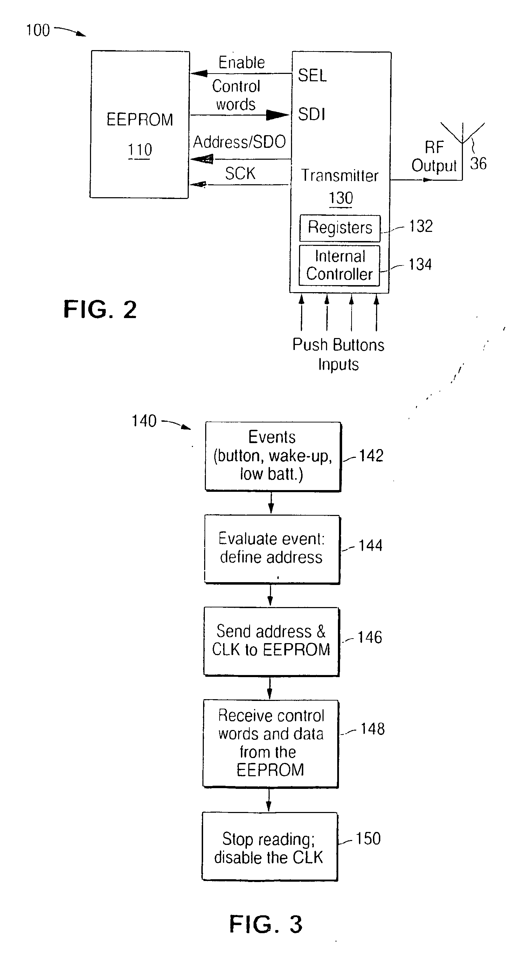

Figure 2 is a functional block diagram illustrating an embodiment of a transmitter 130 according to the present invention where the transmitter is capable of operating in combination with an external micro-controller and also in a stand-alone controller-less mode. The embodiment of Figure 2 illustrates a radio frequency (RF) transmitter 130, but the principles of the present invention may be applied to other transmitter devices having programmable operating characteristics, such as an infrared transmitter. In this embodiment, the internal controller 134 within the transmitter 130 is capable of reading control words directly from an external memory device 110, which is illustrated as an EEPROM in this example. In this case, the transmitter 130 uses input/output (I/O) pins to either interface to an external controller or address the EEPROM 110. In the controller-less mode, the I/O pins generate address and clock signals in order to read out control word data from a data store, e.g. EEPROM 110. In this embodiment, EEPROM 110 is selected to have an output that is compatible with the transmitter's control interface for use with the external micro-controller. As a result, the control words read from the EEPROM 110 can be received in a similar manner as receiving control word data from the external micro-controller.

For example, the transmitter 130 may have separate inputs for a number of push buttons. If the user activates a push button, then the corresponding input to transmitter 130 will go from high to low initiating an event. In response to the event, transmitter 130 outputs an address value to the EEPROM 110 through, in this example, a serial data output (SDO) pin and provides a clock signal through a serial clock (SCK) pin in order to read out data from the EEPROM 110. In this example, the SCK pin of transmitter 130 serves as a data clock input when the transmitter is interfaced to an external micro-controller and as a data clock output when the transmitter 130 is interfaced to EEPROM 110. A serial data input (SDI) pin of transmitter 130 is used as a serial data input both in the controller-less mode and the micro-controller mode. In the micro-controller mode, the SDO pin turns into a CLK output that may provide an accurate CLK signal for a neighboring micro-controller. In this embodiment, transmitter 130 includes a chip select pin (SEL) that is used to enable the transmitter 130 in micro-controller mode, but may be used as an output in the EEPROM mode to enable EEPROM 110. Similar to the standard interface for serial type EEPROMs, the control signals sent by transmitter 130 to EEPROM 110 specify the action (e.g. read) as well as address and clock signal.

The process of reading control words from the EEPROM 110 is initiated by events, which are identified by the internal controller 134. Examples of such events include power on reset (POR), wake-up timeout, low battery detection (LBD), user input signals generated from pushing external push buttons, etc. Internal controller 134 is programmed to detect when stand-alone or controller-less mode is selected and to read control word data from EEPROM 110 responsive to events. Figure 3 is a control flow diagram illustrating an embodiment of a process of the internal controller 134 of the transmitter circuit 130 of Figure 2 for responding to an event and accessing a memory store, such as EEPROM 110, in stand-alone mode of operation.

Based on the type of event, the internal controller 134 defines an address, which will be used to point to an address in the EEPROM 110 where control words and data may be stored corresponding to the event. For example, if there are four push-button inputs to transmitter 130, each input line will have a corresponding address value that the internal controller 134 will use to access memory space in EEPROM 110 in response to an event on the input line. By providing the read-out clock signals to the EEPROM 110, the memory store will send its content as control data to the transmitter. In this embodiment, so long as the transmitter sends read-out clock signals to the EEPROM, it will continue to send its content to the transmitter. In this embodiment, the read-out will be stopped when a control word coming from the EEPROM tells the transmitter to stop sending read-out clock signals. This way the EEPROM may store not only commands but also data to be transmitted as well.

Figure 3 is a control flow diagram illustrating one embodiment of a process 140 performed by internal controller 134 responsive to an event. At step 142, the event is received, e.g. the input on one of the push-button inputs transitions to a low. At step 144, the address value corresponding to the event is retrieved. For example, the address for an event may be stored in a particular register in registers 132 or in a separate data store and processed in a manner similar to interrupt handling. At step 146, the internal controller 134 causes the address defined in step 144 to be output from the transmitter 130 to the EEPROM 110 along with generating the clock signal and any other control signals necessary to read data from the EEPROM. At step 148, as control words are output from EEPROM 110, they are received in transmitter 130. Internal controller 134 uses these control words to control the function of transmitter 130. At step 150, internal controller 134 stops reading control words, e.g. responsive to receiving a "stop" word from EEPROM 110, and disables the clock signal so that no more data is output from the EEPROM.

The internal controller uses the control word data obtained from EEPROM 110 in this manner to operate the transmitter, e.g. transmitting specified data at a defined transmission frequency. By way of further example, in response to the push-button input event a code value stored in EEPROM 110 may be transmitted at a frequency determined from the data obtained from the EEPROM 110 such that a corresponding receiver causes a garage door to be opened or a car door to be unlocked.

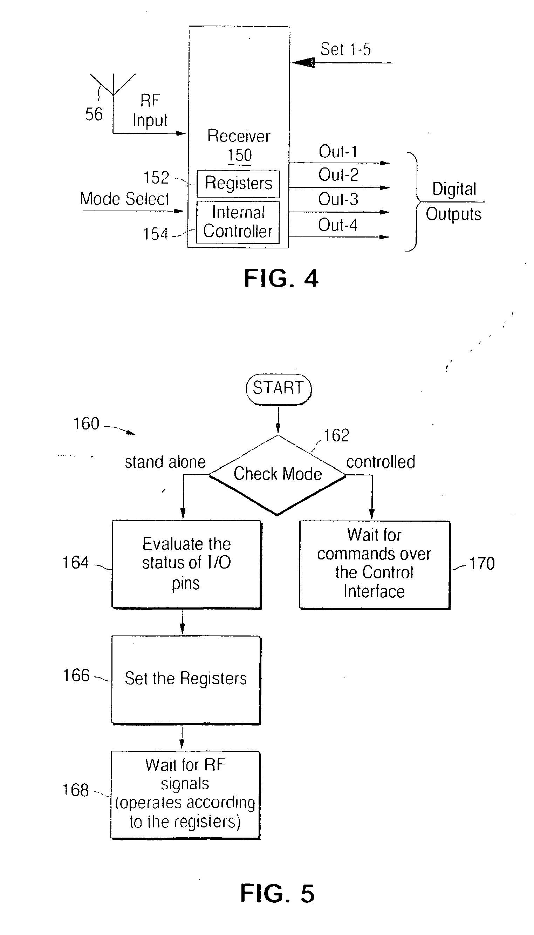

Figure 4 is a functional block diagram illustrating a receiver circuit 150 capable of operating in a controller-less stand-alone mode. Receiver 150 has a mode select I/O pin that is used to signal to the receiver whether there is an external micro-controller present or not. If there is no micro-controller to send control words to the receiver, then the internal controller 154 of the receiver 150 will interpret the logical states of its I/O pins as mode defining information, e.g. operating parameters, that may be stored in internal registers 152. The operating parameters are provided over the available I/O pins. A limited number of I/O pins may serve to limit the possible mode settings. For example, only a subset of the possible mode settings may be accessible and some parameters will remain at their default value. The mode of operation of other analog and digital blocks in the receiver circuit is defined by the content of the internal registers 152. An external data store, such as an EEPROM, may be provided to store parameters that are loaded at initialization in a manner similar to that described for the transmitter 130 of Figure 2.

Figure 5 is a control flow diagram illustrating a process 160 of the internal controller 154 of the receiver circuit 150 of Figure 4 for detecting a stand-alone mode of operation and self-configuring for operation. At step 162, the logical state of a predetermined I/O pin of receiver 150 is checked by internal controller 154 in order to determine the operational mode of the receiver. If the I/O pin is in a pre-determined logical state corresponding to an externally controlled mode, then control flows to step 170 where the internal controller 154 waits to receive commands from an external micro-controller over the control interface pins of receiver 150. If the predetermined I/O pin of receiver 150 is in a predetermined logical state corresponding to controller-less or stand-alone mode, then control flow proceeds to step 164, where internal controller 154 evaluates the settings on its external pins in order to determine the operational parameters and settings for receiver 150. At step 166, internal controller 154 loads the registers 152 of receiver 150 with the operational data obtained at step 164. Internal controller 154 then waits, at step 168, to receive a transmission of data signals and operates in accordance with the data loaded into registers 152. For example, internal controller 154 may be configured to activate a predetermined output pin, e.g. Out-1, in response to receiving a corresponding predetermined RF data signal.

The receiver 150 may have multi purpose mixed digital/analog I/O pins in order to be able to perform the above features. Some I/O pins may be used as digital outputs, which will become active if proper data sequence is received via the RF input 56. The internal controller 154 evaluates the received data and generates output signals (e.g. Out-1, Out-2, Out-3 and Out-4) according to the received data. One use for the standalone mode is in simple applications where there is no need to transmit large amounts of data and the processing at the receiver end is relatively simple. For example, internal controller 154 of receiver 150 may be configured to set some switches responsive to a received data transmission, which may be useful for applications such as door openers, doorbells, remote keyless entry systems, ceiling fan controls or light switches. By way of further example, receiver 150 may be used to implement a simple application wherein the transmitter 130 of Figure 2 transmits a predetermined data signal that is received at receiver 150, which, in turn, is programmed to respond to reception of the predetermined data signal by asserting a digital output line that causes a garage door to be opened or a car door to be unlocked.

The receiver 150 may be programmed for a wide range of operating characteristics because of the range of control words that may be used. However, the number of modes may be limited by the availability of interface pins for the receiver to obtain operating parameter data. It is possible to use a wider range of operating characteristics and also provide a mechanism for automatic configuration of a communication channel between a transmitter and receiver by providing a receiver that can receive operating parameter data through a communications link, such as an RF link, and a transmitter capable of transmitting the operating parameter data to the receiver. The receiver is configured to perform a scanning protocol at initialization to scan for a frequency used by a transmitter. Alternatively, the receiver may be configured to monitor a predetermined service channel at initialization to listen for the transmission of operating parameter data from a transmitter.

Figure 6 is a functional block diagram illustrating a transmitter-receiver pair where the receiver 250 is capable of being configured for operation by the transmitter 230. Even if there is no external micro controller available at the receiver 250, it can still receive complete control words over the communication link, which is a radio channel. After power-on, the receiver 250 listens for control words over a dedicated service channel, or it can wait for special control data to be received on any available radio channel.

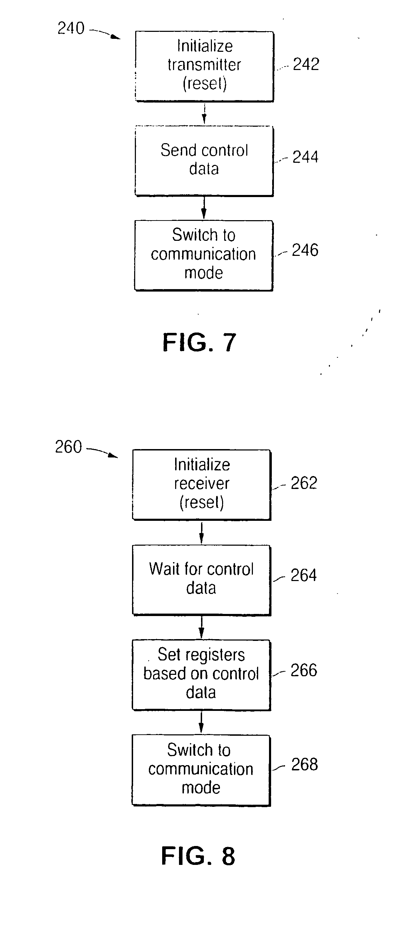

The transmitter 230 is programmed to instruct the receiver 250. The set-up data may be transmitted over a pre-determined dedicated service radio channel or over a channel that is determined by service data that is obtained at power-up from either an external micro-controller or EEPROM 210. For purposes of transmitting operating parameter data to the receiver, it is preferable that a reliable data transmission mode be selected (e.g. low speed, high output power). Figure 7 is a control flow diagram illustrating a process 240 of the internal controller 234 of the transmitter circuit 230 of Figure 6 for configuring the receiver circuit 250 from the transmitter circuit 230. At step 242, in response to a power-on or reset event, transmitter 230 is initialized to send control data to a receiver over an initial channel. This may be performed under the control of an external micro-controller or, in a stand-alone mode, by reading data from an EEPROM using internal controller 234, as is discussed above in greater detail. At step 244, control data for a receiver circuit is transmitted over the initial channel. The data may be transmitted over an initial channel that is a predetermined channel that is dedicated to sending control data for a receiver or a channel determined from data obtained from either the external micro-controller or, in stand-alone mode, from the EEPROM. In the case of the use of the dedicated pre-determined channel, it is possible for the operating data for the dedicated channel to be stored within the transmitter 230 either in registers 232 or in other dedicated data storage. Once the control data is transmitted over the initial channel, then transmitter 230 switches to a communication mode, at step 246, where it awaits an event or control information causing it to transmit data over a communication channel. The communication channel is typically a different channel than the initial channel and corresponds to the control data sent to the receiver via the initial channel. Thus, transmitter 230 is configured to transmit control data for a communications channel over an initial channel and then reconfigures itself to further transmit over the communications channel defined by the transmitted control data.

Figure 8 is a control flow diagram illustrating a process 260 of the internal controller 254 of the receiver circuit 250 of Figure 6 for configuring the receiver circuit 250 from the transmitter circuit 230. After a power-on or reset event, at step 262, internal controller 254 of receiver 250 initializes the receiver to receive control data via the initial channel. This may be accomplished in a variety of ways. If a dedicated predetermined channel is used as the initial channel, then the operating data for the initial channel may be stored within receiver 250. Alternatively, the operating data for the initial channel may be obtained from an external micro-controller or data store, such as an EEPROM, which permits the initial channel to be determined by the externally provided data. Once the receiver 250 is configured with the initial operating data, it waits to receive control data over the initial channel at step 264. When internal controller 254 of receiver 250 recognizes reception of the control data, e.g. the control data for the communication channel that has been transmitted by transmitter 230, it stores, at step 266, the received control data in registers 252 in order to set-up receiver 250 to receive data via the communications channel determined by the received control data. Internal controller 254 then switches to communications mode, at step 268, and waits to receive data via the communications channel.

For a communications channel to be set-up in the manner just described, some care should be taken for the initial control data transmission. Receiver 250 is typically initialized first so that it is waiting for control data, e.g. at step 264 of Figure 8, when transmitter 230 begins to transmit the control data, e.g. at step 244 of Figure 7. Also, there should be only one transmitter transmitting control data within range of the receiver. Otherwise, it is possible for the receiver to receive garbled data or to configure itself in response to the wrong transmitter. However, this aspect can be utilized to automatically set-up transmitter-receiver pairs for simple applications.

The use of the terms "a" and "an" and "the" and similar referents in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A transmitter circuit (130;230), the transmitter circuit (130;230) comprising:
a storage section (132; 232) for storing operating parameters;
a transmitter section (36) configured to transmit a signal having characteristics determined by the operating parameters;
an external data store (110; 210); and
an internal controller (134; 234), the internal controller (134; 234) being configured to operate the transmitter section (36) in accordance with the operating parameters, wherein the internal controller (134; 234) is arranged to sense a state of an input terminal to determine whether an external controller is present or not present, where the internal controller (134; 234) is arranged to operate to receive and store the operating parameters from the external controller when the external controller is present, and where the internal controller (134; 234) is arranged to operate to access the external data store (110; 210) to obtain the operating parameters when the external controller is not present and to store the operating parameters in the storage section (132; 232).

2. The transmitter circuit of claim 1, where the internal controller (134; 234) is further configured to receive a first input signal corresponding to a first event and, responsive thereto, access a first portion of the external data store (110; 210).

3. The transmitter circuit of claim 2, where the internal controller (134; 234) is further configured to receive a second input signal corresponding to a second event and, responsive thereto, access a second portion of the external data store (110; 210).

4. The transmitter circuit of claim 2 or claim 3, where the first event corresponds to a user input.

5. The transmitter circuit of any one of claims 1-4, where the transmitter circuit (130; 230) is configured to interface with the external data store (110; 210) using a pre-determined interface.

6. The transmitter circuit of claim 5, where the pre-determined interface is a serial interface.

7. A receiver circuit (150; 250), the receiver circuit (150; 250) comprising:
a storage section (152; 252) for storing operating parameters;
a receiver section (56) configured to receive a signal having characteristics determined by the operating parameters; and
an internal controller (154; 254), the internal controller (154; 254) being configured to operate the receiver section (56) in accordance with the operating parameters, where the internal controller (154; 254) is arranged to sense a state of an input terminal to determine whether an external controller is present or not present, where the internal controller (154; 254) is arranged to operate to receive and store the operating parameters from the external controller when the external controller is present, and where the internal controller (154; 254) is arranged to operate to read data provided at predetermined terminals of the receiver circuit (150; 250) to obtain at least one of the operating parameters when the external controller is not present.

8. The receiver circuit of claim 7, where the internal controller (154; 254) is further configured to monitor a signal received by the receiver section (56) to detect a first control word and, responsive thereto, set at least one of the operating parameters according to the first control word.

9. The receiver circuit of claim 8, where the internal controller (154; 254) is further configured to monitor a signal received by the receiver section to detect a second control word and, responsive thereto, set at least another one of the operating parameters according to the second control word.

10. The receiver circuit of any one of claims 7-9, where the internal controller (154; 254) is further configured to monitor a signal received by the receiver section (56) to detect a control word and, responsive thereto, output a digital signal at a predetermined terminal according to the control word.

11. The receiver circuit of any one of claims 7-10, where the circuit further includes an external data store and where the internal controller (154; 254) operates to access the external data store to obtain the operating parameters when the external controller is not present and store the operating parameters in the storage section (152; 252).

## Patentansprüche

1. Sendeschaltung (130; 230), wobei die Sendeschaltung (130; 230) aufweist:
einen Speicherabschnitt (132; 232) zum Speichern von Betriebspaxa.metern;
einen Sendeabschnitt (36), der zum Senden eines Signals mit Charakteristika, welche durch die Betriebsparameter bestimmt sind, konfiguriert ist;
einen externen Datenspeicher (110; 210); und
einen internen Controller (134; 234), wobei der interne Controller (134; 234) derart konfiguriert ist, dass er den Sendeabschnitt (36) in Übereinstimmung mit den Betriebsparametern betreibt, wobei der interne Controller (134; 234) eingerichtet ist, einen Zustand eines Eingangsanschlusses zu erfassen, um zu bestimmen, ob ein externer Controller vorliegt oder nicht vorliegt, wobei der interne Controller (134; 234) eingerichtet ist, zum Empfangen und Speichern der Betriebsparameter von dem externen Controller zu arbeiten, wenn der externe Controller vorliegt, und wobei der interne Controller (134; 234) eingerichtet ist, zum Zugreifen des externen Datenspeichers (110; 21C) zu arbeiten, um die Betriebsparameter zu erhalten, wenn der externe Controller nicht vorliegt, und zum Speichen der Betriebsparameter in dem Speicherabschnitt (132; 232).

2. Sendeschaltung nach Anspruch 1, wobei der interne Controller (134; 234) weiterhin zum Empfangen eines ersten Eingangssignals entsprechend einem ersten Ereignis eingerichtet ist, um als Reaktion darauf auf einen ersten Bereich des externen Datenspeichers (110; 210) zuzugreifen.

3. Sendeschaltung nach Anspruch 2, wobei der interne Controller (134; 234) weiterhin zum Empfangen eines zweiten Eingangssignals entsprechend einem zweiten Ereignis konfiguriert ist und um als Reaktion darauf, auf einen zweiten Bereich des externen Datenspeichers (110; 210) zuzugreifen.

4. Sendeschaltung nach Anspruch 2 oder 3, wobei das erste Ereignis einer Benutzereingabe entspricht.

5. Sendeschaltung nach einem der Ansprüche 1-4, wobei die Sendeschaltung (130; 230) konfiguriert ist, um bei Verwendung einer vorbestimmten Schnittstelle eine Verbindung mit dem externen Datenspeicher (110; 210).

6. Sendeschaltung nach einem der Anspruüche 1-5, wobei die vorbestimmte Schnittstelle eine serielle Schnittstelle ist.

7. Empfangsschaltung (150; 250), wobei die Empfangsschaltung (150; 250) aufweist:
einen Speicherabschnitt (152; 252) zum Speichern von Betriebsparametern;
ein Empfangsabschnitt (56), der zum Empfangen eines Signals mit Charakteristika, die durch Betriebsparameter bestimmt sind, konfiguriert ist;
einen internen Controller (154; 254), wobei der interne Controller (154; 254) konfiguriert ist, den Empfangsabschnitt (56) in Übereinstimmung mit den Betriebsparametern zu betreiben, wobei der interne Controller (154; 254) eingerichtet ist, einen Zustand eines Eingangsanschlusses zu erfassen, um zu bestimmen, ob ein externer Controller vorliegt oder nicht vorliegt, wobei der interne Controller (154; 254) eingerichtet ist zum Empfangen und Speichern der Betriebsparameter von dem externen Controller zu arbeiten, wenn der externe Controller vorliegt, und wobei der interne Controller (154; 254) eingerichtet ist, zum Lesen von Daten, welche an vorbestimmten Eingängen der Empfängerschaltung (150; 250) bereitgestellt sind, zu arbeiten, um zumindest einen der Betriebsparameter zu erhalten, wenn der externe Controller nicht vorliegt.

8. Empfangsschaltung nach Anspruch 7, wobei der interne Controller (154, 254) weiterhin konfiguriert ist zum Überwachen eines Signals, welches durch den Empfangsabschnitt (56) empfangbar ist, um ein erstes Steuerwort zu erfassen und um als Reaktion darauf zumindest einen der Betriebsparameter gemäß dem ersten Steuerwort zu setzen.

9. Empfangsschaltung nah Anspruch 8, wobei der interne Controller (154; 254) weiterhin konfiguriert ist zum Überwachen eines Signals, welches durch den Empfangsabschnitt empfangbar ist, um ein zweites Steuerwort zu erfassen und um als Reaktion darauf zumindest noch einen der Betriebsparameter gemäß dem zweiten Steuerwort zu setzen.

10. Empfangsschaltung nach einem der Ansprüche 7-9, wobei der interne Controller (154; 254) weiterhin zum Überwachen eines Signals, welches durch den Empfangsabschnitt (56) empfangbar ist, konfiguriert ist, um ein Steuerwort zu erfassen und um als Reaktion darauf ein digitales Signal an einem vorbestimmten Ausgang gemäß dem Steuerwort auszugeben.

11. Empfangsschaltung nach einem der Ansprüche 7-10, wobei die Schaltung weiterhin einen externen Datenspeicher aufweist, und wobei der interne Controller (154; 254) zum Zugreifen auf den externen Datenspeicher arbeitet, um die Betriebsparameter zu erhalten, wenn der externe Controller nicht vorliegt, und die Betriebsparameter in dem Speicherabschnitt (152; 252) zu speichern.

## Revendications

1. Circuit d'émetteur (130 ; 230), le circuit d'émetteur (130 ; 230) comprenant :
une section de mémorisation (132 ; 232) pour mémoriser des paramètres d'exploitation ;
une section d'émission (36) configurée pour émettre un signal ayant des caractéristiques déterminées par les paramètres d'exploitation ;
une mémoire de données externe (110 ; 210) ; et
une unité de commande interne (134 ; 234), l'unité de commande interne (134 ; 234) étant configurée pour exploiter la section d'émission (36) conformément aux paramètres d'exploitation, l'unité de commande interne (134 ; 234) étant agencée pour détecter un état d'une borne d'entrée afin de déterminer si une unité de commande externe est présente ou absente, l'unité de commande interne (134 ; 234) étant agencée pour fonctionner afin de recevoir et de mémoriser les paramètres d'exploitation provenant de l'unité de commande externe quand l'unité de commande externe est présente, et l'unité de commande interne (134 ; 234) étant agencée pour fonctionner afin de solliciter la mémoire de données externe (110 ; 210) en vue d'obtenir les paramètres d'exploitation quand l'unité de commande externe est absente et de mémoriser les paramètres d'exploitation dans la section de mémorisation (132 ; 232).

2. Circuit d'émetteur selon la revendication 1, dans lequel l'unité de commande interne (134 ; 234) est configurée en outre pour recevoir un premier signal d'entrée correspondant à un premier événement et, en réponse à celui-ci, solliciter une première partie de la mémoire de données externe (110 ; 210).

3. Circuit d'émetteur selon la revendication 2, dans lequel l'unité de commande interne (134 ; 234) est configurée en outre pour recevoir un second signal d'entrée correspondant à un second événement et, en réponse à celui-ci, solliciter une seconde partie de la mémoire de données externe (110 ; 210).

4. Circuit d'émetteur selon la revendication 2 ou la revendication 3, dans lequel le premier événement correspond à une entrée d'utilisateur.

5. Circuit d'émetteur selon l'une quelconque des revendications 1 à 4, le circuit d'émetteur (130 ; 230) étant configuré pour s'interfacer avec la mémoire de données externe (110 ; 210) au moyen d'une interface prédéterminée.

6. Circuit d'émetteur selon la revendication 5, dans lequel l'interface prédéterminée est une interface série.

7. Circuit de récepteur (150 ; 250), le circuit de récepteur (150 ; 250) comprenant :
une section de mémorisation (152 ; 252) pour mémoriser des paramètres d'exploitation ;
une section de réception (56) configurée pour recevoir un signal ayant des caractéristiques déterminées par les paramètres d'exploitation ; et
une unité de commande interne (154 ; 254), l'unité de commande interne (154 ; 254) étant configurée pour exploiter la section de réception (56) conformément aux paramètres d'exploitation, l'unité de commande interne (154 ; 254) étant agencée pour détecter un état d'une borne d'entrée afin de déterminer si une unité de commande externe est présente ou absente, l'unité de commande interne (154 ; 254) étant agencée pour fonctionner afin de recevoir et de mémoriser les paramètres d'exploitation provenant de l'unité de commande externe quand l'unité de commande externe est présente, et l'unité de commande interne (154 ; 254) étant agencée pour fonctionner en vue de lire les données fournies à des bornes prédéterminées du circuit de récepteur (150 ; 250) afin d'obtenir au moins l'un des paramètres d'exploitation quand l'unité de commande externe est absente.

8. Circuit de récepteur selon la revendication 7, dans lequel l'unité de commande interne (154 ; 254) est configurée en outre pour contrôler un signal reçu par la section de réception (56) afin de détecter un premier mot de commande et, en réponse à celui-ci, établir au moins l'un des paramètres d'exploitation en fonction du premier mot de commande.

9. Circuit de récepteur selon la revendication 8 dans lequel l'unité de commande interne (154 ; 254) est configurée en outre pour contrôler un signal reçu par la section de réception afin de détecter un second mot de commande et, en réponse à celui-ci, établir au moins un autre des paramètres d'exploitation en fonction du second mot de commande.

10. Circuit de récepteur selon l'une quelconque des revendications 7 à 9, dans lequel l'unité de commande interne (154 ; 254) est configurée en outre pour contrôler un signal reçu par la section de réception (56) afin de détecter un mot de commande et, en réponse à celui-ci, produire en sortie un signal numérique à une borne prédéterminée en fonction du mot de commande.

11. Circuit de récepteur selon l'une quelconque des revendications 7 à 10, le circuit comportant en outre une mémoire de données externe et dans lequel l'unité de commande interne (154 ; 254) fonctionne pour solliciter la mémoire de données externe afin d'obtenir les paramètres d'exploitation quand l'unité de commande externe est absente et mémoriser les paramètres d'exploitation dans la section de mémorisation (152 ; 252).
